# EUROPEAN PATENT SPECIFICATION

(11) **EP 4 414 405 B1**
(45) Date of publication and mention of the grant of the patent: **31.12.2025**
(21) Application number: 22899150.1
(22) Date of filing: 29.11.2022
(51) Int. Cl.: C08G 63/16, C08G 63/183, C08G 63/20

(54) **BIODEGRADABLE POLYMER**
BIOLOGISCH ABBAUBARES POLYMER
POLYMÈRE BIODÉGRADABLE

(30) Priority: 29.11.2021 KR 20210166743; 28.11.2022 KR 20220161775
(43) Date of publication of application: 14.08.2024
(73) Proprietor: LG Chem, Ltd., Yeoui-daero, Youngdungpo-gu Seoul 07336 (KR)
(72) Inventor: PARK, Jae Hyeong, Daejeon 34122 (KR); LEE, Jeongmin, Daejeon 34122 (KR); HWANG, Yoontae, Daejeon 34122 (KR)
(74) Representative: Goddar, Heinz J.
(86) International application number: PCT/KR2022/019099
(87) International publication number: WO 2023/096468

(56) References cited:
- EP-B1- 2 550 090
- WO-A1-2018/158269
- WO-A1-2020/200714
- KR-A- 20080 042 101
- KR-A- 20130 039 729
- RU-C2- 2 232 177
- NENG WEN-BO, XIE WEN-GUANG, LU BO, ZHEN ZHI-CHAO, ZHAO JUN-LONG, WANG GE-XIA, JI JUN-HUI: "Biodegradable thermoplastic copolyester elastomers: Methyl branched PBA m T", E-POLYMERS, vol. 21, no. 1, 1 January 2021 (2021-01-01), pages 336 - 345, XP093068219, DOI: 10.1515/epoly-2021-0024

## Description

### TECHNICAL FIELD

The present disclosure relates to a biodegradable polymer having high biodegradability as well as excellent mechanical properties.

### BACKGROUND

Polyester resin has excellent mechanical and chemical properties, and thus has been used for a long time for a wide variety of applications including, for example, a drinking water container, a medical product, a food packaging film, a food container, a sheet, a film, and an automobile molded article.

Among them, polybutylene adipate terephthalate (PBAT) is a soft polyester and is biodegradable, and owing to recent environmental regulations, it is attracting attention as a substitute for polyolefin-based polymers, which are mainly used in packaging materials and agricultural films.

However, when the soft PBAT is used alone for this purpose, it is essential to process it into a thin film to ensure biodegradability. Due to such a thin thickness, the film properties are often inferior to the actual resin properties, so a branching agent is added during polymerization to ensure film stability, or the PBAT is mainly blended with a hard polylactic acid (PLA), or is used alone, but is used by compounding with an organic filler such as carbon black.

However, adding a certain amount or more of branching agent has the disadvantage of aggravating gelation, causing poor appearance, or deterioration of physical properties. When blending with PLA, the biodegradability is lower compared to PBAT alone, and a compatibilizer must be added. When PBAT is used alone through compounding with an organic filler, mixing through an extruder is used, but this physical mixing has limitations in dispersing the organic fillers, so it is often added in excess than an amount actually needed, which can reduce the biodegradability or mechanical properties of PBAT.

e-Polymers, vol. 21, No. 1, pages 336-345, discloses the synthesis of poly(butylene-3-methyladipate co-terephthalate) from the monomers of 3-methyl adipic acid, 1,4-butanediol, and terephthalic acid through a process of esterification and polycondensation.

WO 2018/158269 discloses polybutylene adipate terephthalate prepared from terephthalic acid, adipic acid and 1,4-butanediol.

EP 2 550 090 B1 discloses polybutylene adipate terephthalate prepared from terephthalic acid/dimethylterephthalate, adipic acid and 1,4-butanediol.

RU 2232177 C2 discloses a polyester made from terephthalic acid, adipic acid, isophthalic acid and 1,2-butanediol, taken in a ratio of 1:1.1:1:3.3.

### BRIEF DESCRIPTION

### Technical Problem

It is an object of the present disclosure to provide a biodegradable polymer having high biodegradability as well as excellent mechanical properties.

### Technical Solution

In an embodiment of the present disclosure, provided is a polybutylene adipate terephthalate copolymer comprising: a first repeating unit derived from a terephthalic acid-based monomer, a second repeating unit derived from an adipic acid-based monomer, and a third repeating unit derived from a butanediol-based monomer, wherein the second repeating unit comprises one or more of a 2-1 repeating unit derived from adipic acid and a 2-2 repeating unit derived from 3-methyladipic acid, and wherein the third repeating unit comprises one or more of a 3-1 repeating unit derived from 1,4-butanediol and a 3-2 repeating unit derived from 1,2-butanediol, wherein the second repeating unit comprises a 2-1 repeating unit derived from adipic acid and a 2-2 repeating unit derived from 3-methyl adipic acid, or
the third repeating unit comprises a 3-1 repeating unit derived from 1,4-butanediol and a 3-2 repeating unit derived from 1,2-butanediol.

Further, in the polybutylene adipate terephthalate copolymer, a molar ratio of the second repeating unit : the first repeating unit can be about 0.5:1 to about 1.5:1. That is, the repeating unit derived from the adipic acid-based monomer can be included in a ratio of about 50 moles to about 150 moles, or about 80 moles to about 120 moles, or about 100 moles to about 120 moles, based on 100 moles of the repeating unit derived from the terephthalic acid monomer.

Further, in the polybutylene adipate terephthalate copolymer, the third repeating unit can be included in a ratio of about 50 to about 60 mole%.

Further, in the polybutylene adipate terephthalate copolymer, the second repeating unit can comprise both a 2-1 repeating unit derived from adipic acid and a 2-2 repeating unit derived from 3-methyl adipic acid.

In this case, the molar ratio of the 2-1 repeating unit : the 2-2 repeating unit in the polybutylene adipate terephthalate copolymer can be about 1000: 1 to about 100:20. That is, when the polybutylene adipate terephthalate copolymer contains both a repeating unit derived from adipic acid unit and a repeating unit derived from 3-methyl adipic acid, the repeating unit derived from 3-methyl adipic acid can be included in a ratio of about 0.1 to about 20 moles, or about 0.5 to about 15 moles, or about 0.5 to about 10 moles per 100 moles of the repeating unit derived from adipic acid.

Further, in the polybutylene adipate terephthalate copolymer, the third repeating unit can comprise both a 3-1 repeating unit derived from 1,4-butanediol and a 3-2 repeating unit derived from 1,2-butanediol.

In this case, the molar ratio of the 3-1 repeating unit : the 3-2 repeating unit in the polybutylene adipate terephthalate copolymer can be about 1000: 1 to about 100:20. That is, when the polybutylene adipate terephthalate copolymer contains both a repeating unit derived from 1,4-butanediol and a repeating unit derived from 1,2-butanediol, the repeating unit derived from 1,2-butanediol can be included in a ratio of about 0.1 to about 5 moles, or about 0.2 to about 3 moles per 100 moles of the repeating unit derived from 1,4-butanediol.

Further, the polybutylene adipate terephthalate copolymer has a crystallinity value of about 29.0% or less, or about 20 to about 29%, or about 25 to about 28% when measured using a differential scanning calorimeter.

Further, the polybutylene adipate terephthalate copolymer can have an elongation value in the MD direction of about 500% or more, or about 500 to about 700%, or about 500 to about 650%, or about 550 to about 620% when measured according to ASTM D 882.

Further, the polybutylene adipate terephthalate copolymer can have an elongation value in the TD direction of about 500% or more, or about 500 to 700%, or about 550 to about 700% when measured according to ASTM D 882.

Further, the polybutylene adipate terephthalate copolymer can have a weight average molecular weight value of about 50,000 to about 100,000, or 50,000 or more, or about 60,000 or more, or about 70,000 or more, and about 100,000 or less, or about 90,000 or less, or about 85,000 or less, or about 80,000 or less.

The terms "first," "second," etc. are used herein to explain various elements, and these terms are only used to distinguish one constitutional element from the other constitutional elements.

Further, technical terms used herein is for the purpose of describing exemplary embodiments only and is not intended to limit the scope of the invention.

The singular forms "a," "an" and "the" are intended to include plural forms, unless the context clearly indicates otherwise.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

Further, as used herein, in case a layer or an element is mentioned to be formed "on" layers or elements, it means that the layer or element is directly formed on the layers or elements, or it means that other layers or elements can be additionally formed between the layers, on an object, or on a substrate.

According to an embodiment of the present disclosure, provided is a polybutylene adipate terephthalate copolymer comprising: a first repeating unit derived from a terephthalic acid-based monomer, a second repeating unit derived from an adipic acid-based monomer, and a third repeating unit derived from a butanediol-based monomer, wherein the second repeating unit comprises one or more of a 2-1 repeating unit derived from adipic acid and a 2-2 repeating unit derived from 3-methyladipic acid, and wherein the third repeating unit comprises one or more of a 3-1 repeating unit derived from 1,4-butanediol and a 3-2 repeating unit derived from 1,2-butanediol, wherein the second repeating unit comprises a 2-1 repeating unit derived from adipic acid and a 2-2 repeating unit derived from 3-methyl adipic acid, or
the third repeating unit comprises a 3-1 repeating unit derived from 1,4-butanediol and a 3-2 repeating unit derived from 1,2-butanediol .

As mentioned above, the PBAT exhibits high biodegradability and thus, many studies are conducted to utilize it. However, it was difficult to improve the mechanical properties of PBAT while excellently maintaining its biodegradability.

The present inventors have found that in the production of polybutylene adipate terephthalate copolymer, when some other monomers in addition to the commonly used monomers are added to change the bonding structure of the copolymer, it is possible to effectively improve its mechanical properties while maintaining high biodegradability, and completed the present invention.

A polybutylene adipate terephthalate copolymer according to one aspect of the present disclosure comprises a first repeating unit derived from a terephthalic acid-based monomer, a second repeating unit derived from an adipic acid-based monomer, and a third repeating unit derived from a butanediol-based monomer, wherein the second repeating unit comprises one or more of a 2-1 repeating unit derived from adipic acid and a 2-2 repeating unit derived from 3-methyladipic acid, and the third repeating unit comprises one or more of a 3-1 repeating unit derived from 1,4-butanediol and a 3-2 repeating unit derived from 1,2-butanediol, whereinthe second repeating unit comprises a 2-1 repeating unit derived from adipic acid and a 2-2 repeating unit derived from 3-methyl adipic acid, or
the third repeating unit comprises a 3-1 repeating unit derived from 1,4-butanediol and a 3-2 repeating unit derived from 1,2-butanediol .

Each monomer used in the polybutylene adipate terephthalate copolymer of the present disclosure will be described below.

First, the polybutylene adipate terephthalate copolymer according to one aspect of the present disclosure includes a first repeating unit derived from a terephthalic acid-based monomer.

As used herein, the first repeating unit means a residue remaining in a polymer chain in a reaction in which a terephthalic acid-based monomer is condensed to form a polybutylene adipate terephthalate copolymer.

That is, a terephthalic acid-based monomer is used during the production of polybutylene adipate terephthalate of the present disclosure, and the residue derived from the terephthalic acid-based monomer is referred to as a first repeating unit.

Here, the terephthalic acid-based monomer refers to terephthalic acid and its derivative.

Further, the polybutylene adipate terephthalate copolymer according to one aspect of the present disclosure includes a second repeating unit derived from an adipic acid-based monomer.

As used herein, the second repeating unit means a residue remaining in polymer chain in a reaction in which an adipic acid-based monomer is condensed to form a polybutylene adipate terephthalate copolymer.

That is, an adipic acid-based monomer is used during the production of polybutylene adipate terephthalate of the present disclosure, and the residue derived from the adipic acid-based monomer is referred to as a second repeating unit.

Further, the second repeating unit further includes one or more of a 2-1 repeating unit derived from adipic acid and a 2-2 repeating unit derived from 3-methyl adipic acid.

That is, one or more of adipic acid and 3-methyl adipic acid is essentially used during the production of polybutylene adipate terephthalate of the present disclosure, and the polybutylene adipate terephthalate prepared thereby essentially includes one or more of the 2-1 repeating unit and the 2-2 repeating unit.

In particular, 3-methyl adipic acid is configured to link a methyl group to a side branch of the adipic acid structure and thus can increase the frequency of chain entanglement during PBAT production, whereby the toughness of the produced polymer can be improved and the mechanical properties of the polymer can be improved.

Further, the polybutylene adipate terephthalate copolymer according to one aspect of the present disclosure includes a third repeating unit derived from a butanediol-based monomer.

As used herein, the third repeating unit means a residue remaining in a polymer chain in a reaction in which a butanediol based monomer is condensed to form a polybutylene adipate terephthalate copolymer.

That is, a butanediol based monomer is used during the production of polybutylene adipate terephthalate of the present disclosure, and the residue derived from the butanediol-based monomer is referred to as a third repeating unit.

Further, the third repeating unit further includes one or more of the 3-1 repeating unit derived from 1,4-butanediol and the 3-2 repeating unit derived from 1,2-butanediol.

That is, one or more of 1,4-butanediol and 1,2-butanediol are essentially used during the production of polybutylene adipate terephthalate of the present disclosure, and the polybutylene adipate terephthalate prepared thereby essentially includes one or more of the 3-1 repeating unit and the 3-2 repeating unit.

In particular, 1,2-butanediol is configured to link a methyl group that can act as a side branch in its structure, unlike 1,4-butanediol, and thus, can increase the frequency of chain entanglement during PBAT production, whereby the toughness of the produced polymer can be improved, and the mechanical properties of the polymer can be improved.

The polybutylene adipate terephthalate copolymer can essentially include one or more of a 2-2 repeating unit and a 3-2 repeating unit.

More specifically, for example, the polybutylene adipate terephthalate copolymer of the present disclosure can be configured to:
i) comprise a first repeating unit, a 2-1 repeating unit, a 2-2 repeating unit, and a 3-1 repeating unit, or vi) comprise a first repeating unit, a 2-1 repeating unit, a 3-1 repeating unit, and a 3-2 repeating unit; or
ii) comprise a first repeating unit, a 2-1 repeating unit, a 2-2 repeating unit, a 3-1 repeating unit, and a 3-2 repeating unit.

Further, the molar ratio of the second repeating unit : the first repeating unit in the polybutylene adipate terephthalate copolymer can be about 0.5:1 to about 1.5:1. That is, the repeating unit derived from the adipic acid-based monomer can be included in a ratio of about 50 moles to about 150 moles, or about 80 moles to about 120 moles, or about 100 moles to about 120 moles, based on 100 moles of the repeating unit derived from the terephthalic acid-based monomer.

If the amount of terephthalic acid is too high, there can be a problem that the biodegradability and processability of the produced polybutylene adipate terephthalate copolymer are drastically reduced.

Further, in the polybutylene adipate terephthalate copolymer, the third repeating unit can be included in a ratio of about 50 to 60 mole%.

Further, in the polybutylene adipate terephthalate copolymer, the second repeating unit can include both a 2-1 repeating unit derived from adipic acid and a 2-2 repeating unit derived from 3-methyl adipic acid.

In this case, the molar ratio of the 2-1 repeating unit : the 2-2 repeating unit in the polybutylene adipate terephthalate copolymer can be about 1000: 1 to about 100:20. That is, when the polybutylene adipate terephthalate copolymer contains both adipic acid-derived repeating unit and 3-methyl adipic acid-derived repeating unit, the repeating unit derived from 3-methyl adipic acid can be included in a ratio of about 0.1 to about 20 moles, or about 0.5 to about 15 moles, or about 0.5 to about 10 moles per 100 moles of the repeating unit derived from adipic acid.

If the amount of the repeating unit derived from 3-methyl adipic acid, that is, the 2-2 repeating unit, is too small, the effect of improving mechanical properties can be minimal, and if the amount of the repeating unit derived from 3-methyl adipic acid, that is, the 2-2 repeating unit, is too high, the degree of entanglement of a polymer chain in the produced polybutylene adipate terephthalate copolymer increases, and the melt viscosity of the copolymer can increase rapidly, which can lead to process problems, such as deterioration of processability and productivity.

Further, in the polybutylene adipate terephthalate copolymer, the third repeating unit can include both a 3-1 repeating unit derived from 1,4-butanediol and a 3-2 repeating unit derived from 1,2-butanediol.

In this case, the molar ratio of the 3-1 repeating unit : the 3-2 repeating unit in the polybutylene adipate terephthalate copolymer can be about 1000: 1 to about 100:20. That is, when the polybutylene adipate terephthalate copolymer includes both a repeating unit derived from 1,4-butanediol and a repeating unit derived from 1,2-butanediol, the repeating unit derived from 1,2-butanediol can be included in a ratio of about 0.1 to about 5 moles, or about 0.2 to about 3 moles per 100 moles of the repeating unit derived from 1,4-butanediol.

If the amount of the repeating unit derived from 1,2-butanediol, that is, the 3-2 repeating unit, is too small, the effect of improving mechanical properties can be minimal, and if the amount of the repeating unit derived from 1,2-butanediol, that is, the 3-2 repeating unit, is too high, the degree of entanglement of a polymer chain in the produced polybutylene adipate terephthalate copolymer increases, and the melt viscosity of the copolymer can increase rapidly, which can lead to process problems, such as deterioration of processability and productivity.

Further, the polybutylene adipate terephthalate copolymer can have a crystallinity value of about 29.0% or less, or about 20 to about 29%, or about 25 to about 28% when measured using a differential scanning calorimeter.

The crystallinity can be determined as the weight fraction of the crystalline portion relative to the entire resin. In the case of biodegradable polyester resin, it is known that as the crystallinity is increased, the biodegradability is deceased, so that the biodegradability can also be roughly predicted through the crystallinity.

The polybutylene adipate terephthalate copolymer according to one embodiment contains a monomer with a structure that has not been commonly used, and thus, chain symmetry is made lower than existing PBAT, and thus the crystallinity is lowered.

The polybutylene adipate terephthalate copolymer of the present disclosure has a crystallinity value in the above range, and thus can maintain excellent biodegradability.

Here, the crystallinity can be measured using a differential scanning calorimeter. Specifically, 1st heating, 1st cooling, and 2nd heating are performed sequentially in the temperature range (-70~200 degrees, 10 degrees/min) using a differential scanning calorimeter (DSC, device name: DSC 2500, manufacturer: TA Instruments), and the crystallinity can be calculated (using PBAT ΔHm⁰ = 114J/g) using the heat of fusion of the melting transition during the 2nd heating.

Further, the polybutylene adipate terephthalate copolymer can have an elongation value in the MD direction of about 500% or more, or about 500 to about 700%, or about 500 to about 650%, or about 550 to about 620% when measured according to ASTM D 882.

Further, the polybutylene adipate terephthalate copolymer can have an elongation value in the TD direction of about 500% or more, or about 500 to about 700%, or about 550 to about 700% when measured according to ASTM D 882.

In this manner, the polybutylene adipate terephthalate copolymer according to one embodiment of the present disclosure can realize superior mechanical properties compared to existing ones.

Further, the polybutylene adipate terephthalate copolymer can have a weight average molecular weight value of about 50,000 to about 150,000, or 50,000 or more, or about 60,000 or more, or about 70,000 or more, and about 150,000 or less, or about 100,000 or less, or about 90,000 or less, or about 85,000 or less, or about 80,000 or less.

The polybutylene adipate terephthalate copolymer can be produced by subjecting a monomer mixture containing each of the above-mentioned monomers to an esterification reaction in the presence of a polymerization catalyst.

The catalyst is not particularly limited as long as it is widely used as a polyester polymerization catalyst in the technical field to which the present disclosure belongs.

Specifically, the catalyst can be one or more types selected from the group consisting of titanium methoxide, titanium ethoxide, titanium propoxide, titanium isopropoxide, titanium butoxide, and titanium isobutoxide.

For example, the catalyst can be titanium butoxide.

During the polymerization reaction, the polymerization reaction can proceed with respect to the entire monomer mixture in which both the above-mentioned monomers and catalyst are mixed, or the polymerization reaction can also proceed by mixing each monomer and catalyst separately and then individually adding them to a reactor, or the polymerization reaction can proceed after preparing the prepolymer first.

When the catalyst mixture is prepared separately, the polymerization reaction can proceed by mixing a butanediol-based monomer and a catalyst to prepare a catalyst mixture, preparing the terephthalic acid monomer and the adipic acid-based monomer as a separate monomer mixture, and then mixing the two.

The catalyst in the catalyst mixture can be included in an amount of 0.001 to 10 parts by weight based on 100 parts by weight of adipic acid in the monomer mixture.

Within the above range, the esterification reaction of the monomer mixture and the polymerization of the corresponding esterification reaction product (i.e., prepolymer) can be appropriately mediated.

However, if the amount of catalyst added is too small during the production of the catalyst mixture, the polymerization time is made longer and the productivity can decrease. Unlike the same, if the amount of the catalyst added is too large, the polymerization time can become shorter, but since the possibility of discoloration of the final PBAT increases, the amount of heat stabilizer must be increased in proportion to the amount of catalyst added, which results in an increase of the production cost.

Considering such a tendency, the amount of catalyst added in the catalyst mixture can be adjusted. For example, the catalyst in the catalyst mixture can be used in an amount of 0.001 parts by weight or more, 0.005 parts by weight or more, or 0.01 parts by weight or more, and 10 parts by weight or less, 5 parts by weight or less, or 0.1 parts by weight or less, based on 100 parts by weight of the adipic acid-based monomer in the monomer mixture.

On the other hand, the prepolymer refers to a polymer having a relatively low degree of polymerization in which the polymerization reaction is stopped at an intermediate stage in order to facilitate molding.

When producing a prepolymer, a monomer mixture containing adipic acid and terephthalic acid is subjected to an esterification reaction in the presence of the catalyst mixture to proceed primary polymerization, thereby being able to produce a low molecular weight copolymer having a low degree of polymerization.

When producing a prepolymer, 0.1 to 1 part by weight of a crosslinking agent or branching agent can be added based on 100 parts by weight of adipic acid in the monomer mixture to proceed an esterification reaction.

When esterification is performed by adding a crosslinking agent, an internally cross-linked prepolymer is produced, and the mechanical properties of the final composite can be improved.

The crosslinking agent is a low molecular weight compound containing 3 or more hydroxy groups in the molecule, or 3 or more carboxy groups in the molecule. For example, an erythritol-based compound, a glycerol-based compound, a citric acid-based compound, or the like can be used. For example, the crosslinking agent can be pentaerythritol.

The step of producing the prepolymer can be performed at a temperature range of 150 to 350°C.

In the above temperature range, a prepolymer can be produced while maintaining uniform dispersion of each monomer.

For example, the step of producing the prepolymer can be performed at a temperature range of 150°C or more, 170°C or more, 190°C or more, or 210°C or more, and 350°C or less, 320°C or less, 290°C or less, or 250°C or less.

During the production of a prepolymer, nitrogen gas also can be injected. Specifically, when nitrogen gas is injected, water generated as a by-product is quickly removed, thereby suppressing the reverse reaction caused by water, improving the conversion rate of monomers, and thereby increasing the molecular weight of the produced copolymer.

For example, nitrogen gas can be injected in an amount of (0.001) ml/min or more, (0.01) ml/min or more, (0.02) ml/min or more, or (0.05) ml/min or more, and

(100) ml/min or less, (50) ml/min or less, (10) ml/min or less, or (5) ml/min or less.

In this polymerization reaction of polymerizing the prepolymer again, 0.001 to 10 parts by weight of the catalyst can be further added based on 100 parts by weight of adipic acid in the monomer mixture.

There is a high possibility that the activity of the initially added catalyst will decrease during the prepolymer production stage. For example, titanium, which is the central metal component of the catalyst, can react with water, which is a by-product of the ester reaction, to form titanium oxide, and a monomer component or prepolymer component can be substituted at the alkoxide site of titanium alkoxide.

Therefore, it can be preferable to further add a catalyst immediately before the reaction.

For example, the further added catalyst can be used in an amount of 0.001 parts by weight or more, 0.005 parts by weight or more, or 0.01 parts by weight or less, and 10 parts by weight or less, 5 parts by weight or less, or 0.1 parts by weight or less, based on 100 parts by weight of adipic acid-based monomer in the monomer mixture.

After further adding the catalyst, a heat stabilizer can be added. When a heat stabilizer is added, discoloration of the final PBAT can be suppressed.

Specifically, the heat stabilizer can be added in an amount of 0.001 to 1 part by weight based on 100 parts by weight of adipic acid-based monomer in the monomer mixture.

For example, the heat stabilizer can be added in an amount of 0.001 part by weight or more, 0.005 part by weight or more, 0.08 part by weight or more, or 0.01 part by weight or more, and 1 part by weight or less, 0.6 part by weight or less, 0.3 part by weight or less, or 0.1 part by weight or less, based on 100 parts by weight of adipic acid in the monomer mixture.

Polymerizing the prepolymer can include a step of raising the temperature of the reactor containing the prepolymer until it reaches a temperature within the range of 150 to 350°C; a step of raising the temperature and then reducing the reactor pressure until the pressure reaches 0.1 to 0.00001 atm; and maintaining the pressure and temperature after the pressure reduction and terminating the reaction after 2 to 8 hours have passed.

For example, the temperature of the reactor containing the prepolymer can be raised until it reaches a temperature range of 150°C or more, 170°C or more, 190°C or more, or 210°C or more, and 350°C or less, 320°C or less, 290°C or less, or 250°C or less.

After 1 to 10 minutes from reaching the temperature range, the pressure of the reactor can be reduced until it reaches a pressure range of 0.00001 atm or more, 0.00005 atm or more, 0.0001 atm or more, or 0.0002 atm or more, and 0.1 atm or less, 0.05 atm or less, 0.03 atm or less, or 0.01 atm or less.

After the pressure reduction, the reaction is carried out while maintaining the pressure and temperature, and the reaction can be terminated after 2 minutes or more, 2.2 hours or more, 2.4 hours or more, or 3 hours or more, and 8 hours or less, 7.5 hours or less, 7 hours or less, or 6 hours have passed from the start of the reaction.

### Advantageous Effects

A biodegradable polymer according to one embodiment of the present disclosure can have high biodegradability as well as excellent mechanical properties.

### EXAMPLES

Hereinafter, the action and effect of the present disclosure will be described in more detail with reference to specific examples. However, these examples are for illustrative purposes only, and the scope of the present disclosure is not intended to be limited thereby.

### <Example>

The reaction was carried out in a batchwise manner, and after making the prepolymer, the polymerization reaction proceeded.

The monomer components listed in Table 1 below, pentaerythritol, and titanium butoxide (primary, 0.5 mmol) were charged into a reactor, and the reactor was maintained at about 230°C. While flowing nitrogen gas into the reactor to remove side reactants for about 3 hours, the esterification reaction proceeded (prepolymer reaction).

When the prepolymer reaction was completed, titanium butoxide (secondary, 0.7 mmol) and triethyl phosphonoacetate (1.3 mmol) as a heat stabilizer were added thereto, and the mixture was stirred so that the catalyst component and the heat stabilizer component were uniformly dispersed in the prepolymer.

Subsequently, the temperature of the reactor was raised to about 240°C, and after 5 minutes had passed after the temperature of the reactor reached about 240°C, the pressure in the reactor was reduced, and the polymerization reaction proceeded for about 4 hours at a pressure of 3 mbar or less to obtain a PBAT polymer.

The reaction conditions for each Example and Comparative Example are summarized in Table 1 below. Examples 7 and 8 are reference examples (not according to the invention).

**[Table 1]**

| | Tp | Ad | 3MAd | 1,4Bd | 1,2Bd |
|---|---|---|---|---|---|
| | (mol) | (mol) | (mol) | (mol) | (mol) |
| Example 1 | 1.91 | 2.07 | | 6.77 | 0.0191 |
| Example 2 | 1.91 | 2.07 | | 6.77 | 0.191 |
| Example 3 | 1.91 | 2.07 | 0.0191 | 6.77 | - |
| Example 4 | 1.91 | 2.07 | 0.191 | 6.77 | - |
| Example 5 | 1.91 | 2.07 | 0.01 | 6.77 | - |
| Example 6 | 1.91 | 2.07 | 0.4 | 6.77 | - |
| Example 7 | 1.91 | 2.07 | 0.0191 | 6.77 | 0.0191 |
| Example 8 | 1.91 | 2.07 | 0.0191 | 6.77 | 0.191 |
| Comparative Example 1 | 1.91 | 2.07 | | 6.77 | |

| | | | | | |
|---|---|---|---|---|---|
| *Tp: terephthalic acid; Ad: adipic acid; 3Mad: 3-methyl adipic acid; 1,4Bd: 1,4-butanediol; 1,2-Bd: 1,2-butanediol | | | | | |

### Evaluation of physical properties

### Measurement of weight average molecular weight:

After a measurement object was dissolved in chloroform at a concentration of 1 mg/ml, the solution was put into a gel permeation chromatography (GPC) instrument (PL GPC220, Agilent Technologies) to measure the molecular weight. At this time, polystyrene was used as the standard polymer.

### Measurement of crystallinity:

The biodegradable polymer composites of Examples 1 to 4 and the PBAT of Comparative Examples 1 to 3 were respectively subjected to 1st heating, 1st cooling, and 2nd heating sequentially in the temperature range (-70~200 degrees, 10 degrees/min) using a differential scanning calorimeter (DSC, device name: DSC 2500, manufacturer: TA Instruments), and the crystallinity was calculated (using PBAT ΔHm⁰ = 114J/g) using the heat of fusion of the melting transition during the 2nd heating.

### Elongation:

The PBAT copolymers of the Examples and Comparative Examples were respectively subjected to an inflation molding by using a single screw extruder (Shinwhwa Industrial, Blown Film M/C, 50 pi, L/D=20) at an extrusion temperature of 130°C to 170°C to a thickness of about 50 µm. At this time, the die gap was 2.0 mm and the blown-up ratio was 2.3.

### Elongation:

Respective film samples were subjected to tensile testing using an Instron Universal Testing Machine (UTM) in accordance with ASTM D 882 at a stretching speed of 10 mm/min to measure elongation values. At this time, the tensile test conditions applied were Load Cell 10KN and LE position 40mm. Elongations were measured in the machine-direction (MD), which is MD, and in the transverse-direction (TD), which is TD, respectively.

The measurement results are summarized in Table 2 below.

**[Table 2]**

| | Mw (*10⁴) | Crystallinity (%) | Elongation (MD, %) | Elongation (TD, %) |
|---|---|---|---|---|
| Example 1 | 7.75 | 27.7 | 570 | 560 |
| Example 2 | 8.04 | 25.8 | 610 | 660 |
| Example 3 | 7.69 | 27.9 | 555 | 580 |
| Example 4 | 7.92 | 25.2 | 595 | 620 |
| Example 5 | 8.02 | 25.8 | 645 | 590 |
| Example 6 | 7.49 | 24.3 | 565 | 630 |
| Example 7 | 7.57 | 27.2 | 610 | 600 |
| Example 8 | 7.46 | 27.0 | 620 | 550 |
| Comparative Example 1 | 7.88 | 29.8 | 470 | 510 |

Referring to Table 2, it can be confirmed that although the polybutylene adipate terephthalate copolymer according to an embodiment of the present disclosure has the degree of polymerization in a similar level to Comparative Example, although it further contains a monomer having a specific structure during polymerization.

In addition, the crystallinity of the polybutylene adipate terephthalate copolymer according to the Examples generally decreases compared to the Comparative Example, which is thought to be due to the steric hindrance effect that the alkyl groups near the separately added monomers disturbs crystallization of the polybutylene adipate terephthalate copolymer chains.

In addition, it is generally known that as the crystallinity of polybutylene adipate terephthalate copolymer decreases, the mechanical properties also decrease. However, in the case of polybutylene adipate terephthalate copolymer according to an embodiment of the present disclosure, although the crystallinity decreases compared to the Comparative Example, it can be confirmed that the mechanical properties increases compared to the Comparative Example. This is thought to be because chain entanglement increases due to the side alkyl groups in the polymer chain, and thus the toughness of the polymer increases.

## Claims

1. A polybutylene adipate terephthalate copolymer, comprising:
a first repeating unit derived from a terephthalic acid-based monomer, a second repeating unit derived from an adipic acid-based monomer, and a third repeating unit derived from a butanediol-based monomer,
wherein the second repeating unit comprises one or more of a 2-1 repeating unit derived from adipic acid and a 2-2 repeating unit derived from 3-methyladipic acid, and
wherein the third repeating unit comprises one or more of a 3-1 repeating unit derived from 1,4-butanediol and a 3-2 repeating unit derived from 1,2-butanediol,
**characterized in that**
the second repeating unit comprises a 2-1 repeating unit derived from adipic acid and a 2-2 repeating unit derived from 3-methyl adipic acid, or
the third repeating unit comprises a 3-1 repeating unit derived from 1,4-butanediol and a 3-2 repeating unit derived from 1,2-butanediol.

2. The polybutylene adipate terephthalate copolymer according to claim 1, wherein:
a molar ratio of the second repeating unit : the first repeating unit is 0.5:1 to 1.5:1.

3. The polybutylene adipate terephthalate copolymer according to claim 1, wherein:
the third repeating unit is included in a ratio of 50 to 60 mole%.

4. The polybutylene adipate terephthalate copolymer according to claim 1, wherein, when the second repeating unit comprises a 2-1 repeating unit derived from adipic acid and a 2-2 repeating unit derived from 3-methyl adipic acid:
a molar ratio of the 2-1 repeating unit : the 2-2 repeating unit is 1000:1 to 100:20.

5. The polybutylene adipate terephthalate copolymer according to claim 1, wherein, when the third repeating unit comprises a 3-1 repeating unit derived from 1,4-butanediol and a 3-2 repeating unit derived from 1,2-butanediol:
a molar ratio of the 3-1 repeating unit : the 3-2 repeating unit is 1000: 1 to 100:20.

6. The polybutylene adipate terephthalate copolymer according to claim 1,
which has a weight average molecular weight value of 50,000 to 150,000 as measured by the method outlined in the description.

## Patentansprüche

1. Poly(butylen-adipat-terephthalat)-Copolymer, umfassend:
eine erste Wiederholungseinheit, die von einem Monomer auf Basis von Terephthalsäure abgeleitet ist, eine zweite Wiederholungseinheit, die von einem Monomer auf Basis von Adipinsäure abgeleitet ist, und eine dritte Wiederholungseinheit, die von einem Monomer auf Basis von Butandiol abgeleitet ist,
wobei die zweite Wiederholungseinheit eine oder mehrere von einer 2-1-Wiederholungseinheit, die von Adipinsäure abgeleitet ist, und einer 2-2-Wiederholungseinheit, die von 3-Methyladipinsäure abgeleitet ist, umfasst, und
wobei die dritte Wiederholungseinheit eine oder mehrere von einer 3-1-Wiederholungseinheit, die von 1,4-Butandiol abgeleitet ist, und einer 3-2-Wiederholungseinheit, die von 1,2-Butandiol abgeleitet ist, umfasst,
**dadurch gekennzeichnet, dass**
die zweite Wiederholungseinheit eine 2-1-Wiederholungseinheit, die von Adipinsäure abgeleitet ist, und eine 2-2-Wiederholungseinheit, die von 3-Methyladipinsäure abgeleitet ist, umfasst, oder
die dritte Wiederholungseinheit eine 3-1-Wiederholungseinheit, die von 1,4-Butandiol abgeleitet ist, und eine 3-2-Wiederholungseinheit, die von 1,2-Butandiol abgeleitet ist, umfasst.

2. Poly(butylen-adipat-terephthalat)-Copolymer nach Anspruch 1, bei dem:
ein Molverhältnis der zweiten Wiederholungseinheit : der ersten Wiederholungseinheit 0,5:1 bis 1,5:1 beträgt.

3. Poly(butylen-adipat-terephthalat)-Copolymer nach Anspruch 1, bei dem:
die dritte Wiederholungseinheit in einem Verhältnis von 50 bis 60 Mol-% enthalten ist.

4. Poly(butylen-adipat-terephthalat)-Copolymer nach Anspruch 1, bei dem, wenn die zweite Wiederholungseinheit eine 2-1-Wiederholungseinheit, die von Adipinsäure abgeleitet ist, und eine 2-2-Wiederholungseinheit, die von 3-Methyladipinsäure abgeleitet ist, umfasst:
ein Molverhältnis der 2-1-Wiederholungseinheit : der 2-2-Wiederholungseinheit 1000:1 bis 100:20 beträgt.

5. Poly(butylen-adipat-terephthalat)-Copolymer nach Anspruch 1, bei dem, wenn die dritte Wiederholungseinheit eine 3-1-Wiederholungseinheit, die von 1,4-Butandiol abgeleitet ist, und eine 3-2-Wiederholungseinheit, die von 1,2-Butandiol abgeleitet ist, umfasst:
ein Molverhältnis der 3-1-Wiederholungseinheit : der 3-2-Wiederholungseinheit 1000:1 bis 100:20 beträgt.

6. Poly(butylen-adipat-terephthalat)-Copolymer nach Anspruch 1,
das einen Wert des gewichtsgemittelten Molekulargewichts von 50.000 bis 150.000, wie durch das in der Beschreibung umrissene Verfahren gemessen, aufweist.

## Revendications

1. Copolymère de type poly(adipate-co-téréphtalate de butylène) comprenant :
un premier motif de répétition dérivé d'un monomère à base d'acide téréphtalique, un deuxième motif de répétition dérivé d'un monomère à base d'acide adipique et un troisième motif de répétition dérivé d'un monomère à base de butanediol,
où le deuxième motif de répétition comprend un ou plusieurs d'un motif de répétition 2-1 dérivé de l'acide adipique et d'un motif de répétition 2-2 dérivé de l'acide 3-méthyladipique et
où le troisième motif de répétition comprend un ou plusieurs d'un motif de répétition 3-1 dérivés du 1,4-butanediol et d'un motif de répétition 3-2 dérivé du 1,2-butanediol,
**caractérisé en ce que**
où le deuxième motif de répétition comprend un motif de répétition 2-1 dérivé de l'acide adipique et un motif de répétition 2-2 dérivé de l'acide 3-méthyladipique ou
où le troisième motif de répétition comprend un motif de répétition 3-1 dérivé du 1,4-butanediol et un motif de répétition 3-2 dérivé du 1,2-butanediol.

2. Copolymère de type poly(adipate-co-téréphtalate de butylène) selon la revendication 1, où :
un rapport molaire entre le deuxième motif de répétition et le premier motif de répétition va de 0,5:1 à 1,5:1.

3. Copolymère de type poly(adipate-co-téréphtalate de butylène) selon la revendication 1, où :
le troisième motif de répétition est inclus dans un rapport qui va de 50 à 60 % en moles.

4. Copolymère de type poly(adipate-co-téréphtalate de butylène) selon la revendication 1 où, quand le deuxième motif de répétition comprend un motif de répétition 2-1 dérivé de l'acide adipique et un motif de répétition 2-2 dérivé de l'acide 3-méthyladipique :
un rapport molaire entre le motif de répétition 2-1 et le motif de répétition 2-2 va de 1 000:1 à 100:20.

5. Copolymère de type poly(adipate-co-téréphtalate de butylène) selon la revendication 1 où, quand le troisième motif de répétition comprend un motif de répétition 3-1 dérivé du 1,4-butanediol et un motif de répétition 3-2 dérivé du 1,2-butanediol :
un rapport molaire entre le motif de répétition 3-1 et le motif de répétition 3-2 va de 1 000:1 à 100:20.

6. Copolymère de type poly(adipate-co-téréphtalate de butylène) selon la revendication 1
qui a une masse moléculaire moyenne en poids, comme mesurée par la méthode brossée dans les grandes lignes dans la description, qui va de 50 000 à 150 000.
